# EUROPÄISCHE PATENTSCHRIFT

(11) **EP 1 990 168 B1**
(45) Veröffentlichungstag und Bekanntmachung des Hinweises auf die Patenterteilung: **27.06.2012**
(21) Anmeldenummer: 07009423.0
(22) Anmeldetag: 10.05.2007
(51) Int. Cl.: B28D 1/22, B23K 26/40, B23K 26/08

(54) **Verfahren zum laserthermischen Trennen von keramischem oder anderem spröden Plattenmaterial**
Method for laser thermal separation of ceramic or other brittle flat materials
Procédé destiné à la séparation thermique au laser de matériaux en plaques céramiques ou d'autres matériaux en plaques fragiles

(43) Veröffentlichungstag der Anmeldung: 12.11.2008
(73) Patentinhaber: Grenzebach Maschinenbau GmbH, 86663 Asbach-Bäumenheim/Hamlar (DE)
(72) Erfinder: Friedl, Wolfgang, Dipl.-Ing. (FH), 86687Kaisheim (DE)
(74) Vertreter: Gallo, Wolfgang

(56) Entgegenhaltungen:
- EP-A- 0 448 168
- EP-A- 1 586 406
- EP-A- 1 772 245
- US-A1- 2002 179 667
- BLACK I ET AL: "Laser cutting of thick ceramic tile" OPTICS AND LASER TECHNOLOGY, ELSEVIER SCIENCE PUBLISHERS BV., AMSTERDAM, NL, Bd. 29, Nr. 4, Juni 1997 (1997-06), Seiten 193-205, XP004084888 ISSN: 0030-3992

## Beschreibung

Die Erfindung betrifft ein Verfahren zum laserthermischen Trennen von sprödem, insbesondere keramischem Plattenmaterial gemäß dem Oberbegriff des Anspruchs 1.

Ein solches Verfahren ist aus EP 0 448 168 A1 bekannt.

Dabei sind unter dem Oberbegriff "Platten aus keramischem oder anderem sprödem Material" mehrere Millimeter (insbesondere ca. 3 bis 20 mm) dicke Platten aus spröden Materialien wie Hartkeramik, Porzellankeramik, oder Tonzeug, aber auch beispielsweise Platten aus extrem dickem Spezialglas zu verstehen.

Ein Hauptanwendungsgebiet der Erfindung ist beispielsweise das Unterteilen großformatig hergestellter keramischer Platten in gewünschte kleinere Fliesenformate bei der Herstellung von Baufliesen aus Keramikmaterial unterschiedlicher Härtegrade.

Heutzutage erfolgt das Formatieren von Baufliesen überwiegend dadurch, dass das "grüne" Plattenmaterial vor dem Brennen durch Stanzen auf die gewünschten Fliesenformate unterteilt wird. Das hat aber den Nachteil, dass das Umstellen auf andere Fliesenformate extrem zeitaufwendig und damit teuer ist. Dies führt zur Notwendigkeit großer Lagerhaltung beim Hersteller. Neuere Produktionslinien arbeiten mit der Herstellung größerer Fließen, die dann nach dem Brennen auf kleinere Formate geschnitten werden. Dieses Schneiden wird mit Hilfe mechanischer Anritz- und Brechvorrichtungen ausgeführt oder erfolgt durch Sägen. Aber diese Technologie erweist sich auch als unbefriedigend.

In den letzten Jahren ist intensiv an dem laserthermischen Trennen von Glasplattenmaterial als Alternative zum herkömmlichen mechanischen Trennen durch Anritzen und anschließendes Brechen gearbeitet worden. Im Fokus dieser Arbeiten stand insbesondere das Brechen von Flachglas.

Die DE 199 62 906 A1 schlägt vor, zum Schneiden von flachen Werkstücken aus sprödbrüchigem Material, womit im wesentlichen Flachglas gemeint ist, eine Ritzspur entlang der gewünschten Trennlinie mechanisch herzustellen und anschließend durch kurzzeitiges oszillierendes Erwärmen entlang eines Abschnitts der Ritzspur mittels eines Laserstrahls das Brechen des Materials entlang der Ritzspur auszulösen.

Aus der EP 0 448 168 A1 ist ein Verfahren zum Trennen einer brüchigen Platte, womit wiederum in erster Linie eine Glasplatte gemeint ist, bekannt, bei dem ein mehrfaches Überstreichen der vorgesehenen Trennlinie mit einem Laserstrahl über die ganze Trennlinienlänge zum Einbringen von Wärme und Erzeugen thermomechanischer Spannungen erfolgt, um die Platte, ausgehend von einem zuvor angebrachten Anritz, entlang der Trennlinie zu brechen.

Die US 2002/1 79 667 A1 schlägt zum Trennen von Platten aus brüchigem Material, insbesondere Glas oder Keramik, längs einer beliebig konturierten Trennlinie das Erwärmen mit einem Laserstrahl entlang der vorgesehenen Trennlinie, gefolgt von einer Kühldüse, vor, wobei je nach Krümmung der Trennlinie mittels des oszillierenden Laserstrahls ein Brennfleck variabler Länge im Bereich von 10 mm bis 100 mm erzeugt wird.

Aus der US 2003/0 62 348 A1 ist ein Verfahren zum Trennen nichtmetallischer Substrate wie beispielsweise Glas bekannt, wobei ein erster Laserstrahl die vorgesehene Trennlinie bestreicht dann ein Kühlmittel zur Erzeugung von Wärmespannungen aufgebracht und dann die vorgesehene Trennlinie mittels eines zweiten Laserstrahls bestrichen wird.

Aus der WO 02/48 0 59 A1 ist ein Verfahren zum Trennen von Platten aus Glas oder Keramik durch Erzeugen eines thermischen Spannungsrisses entlang der vorgesehenen Trennlinie bekannt, bei welchem ein Laserstrahl entlang der vorgesehenen Trennlinie Wärme in die Platte einträgt, wobei, beispielsweise durch Fokussieren des Laserstrahls auf einen unterhalb der Oberfläche der Platte liegenden Bereich, fokusmäßig so gesteuert wird, dass ein Startriss im wesentlichen ohne Materialabtrag gebildet wird.

Alle diese verschiedenen bekannten Verfahren sind in den jeweiligen Dokumenten zwar überall als Verfahren zum Trennen von brüchigen Materialien wie Glas und Keramik bezeichnet, aber in den Ausführungsbeispielen jeweils im Hinblick auf das Trennen von Flachglas besonders beschrieben und offensichtlich für diesen Anwendungsbereich auch besonders geeignet. Keines der genannten Dokumente befasst sich jedoch näher mit dem Trennen von keramischen Materialien und den doch nicht unerheblichen Unterschieden zwischen Flachglas und Keramikmaterial.

Jedoch sind Glas einerseits und Keramik andererseits doch sehr unterschiedliche Materialien. Beide sind zwar brüchig, haben aber eine doch sehr verschiedene Struktur. Ein erheblicher Unterschied zwischen den beiden Materialien besteht bereits darin, dass Glas lichtdurchlässig ist während Keramik lichtundurchlässig ist. Glas ist damit für Laserlicht teilweise lichtdurchlässig, nämlich bei Feststofflasern während das bei CO2-Lasern nicht gilt. Ein Hauptunterschied zwischen Glas und Keramik im Bezug auf Lasertrennverfahren besteht aber in der Wärmeübergangsgeschwindigkeit und im Ausdehnungskoeffizienten. Kalknatronglas ist dabei noch relativ einfach zu beherrschen, Borsilikatglas schon schwieriger, aber immer noch weit berechenbarer als Keramik. Bei Keramik gibt es völlig unterschiedliche Wärmeleitzahlen, und je nach Mischung erhält man sehr unterschiedliche Wärmeübergänge bei meist sehr geringen und mit steigender Temperatur stark nichtlinearen Ausdehnungskoeffizienten.

Es verwundert daher auch nicht, dass, wie sich durch Versuche leicht nachweisen lässt, die eben erwähnten bekannten Verfahren zwar zum Trennen von Flachglas mäßiger Dicke brauchbar sind, aber zum Trennen von Platten aus spröden Materialien der Eingangs erwähnten Art, nämlich keramischen Materialien und sehr dicken Spezialgläsern, entweder überhaupt nicht oder nur sehr unbefriedigend funktionieren. Denn bei den relativ dicken Fliesen und bei sehr dicken Glasplatten ist die zum Trennen erforderliche Wärmemenge im Volumen des Materials so hoch, dass bei Anwendung dieser bekannten Verfahren die Fliesen beim Wärmeeintrag bereits vor dem Entstehen eines Trennungsritzes zerplatzen.

Ein an sich funktionierendes Verfahren zum Trennen von keramischem Plattenmaterial ist aus der EP-A-1 618 985 bekannt. Dort erfolgt ein Schneiden des keramischen Plattenmaterials durch die Kombination eines relativ zur Schnittlinie bewegten Laserstrahls und eines unmittelbar folgenden Anblasens mit einem supersonischen Gasstrahl. Bei diesem Schneidverfahren wird eine Schnittfuge mit einer gewissen Breite durch Materialabtrag erzeugt. Wegen des notwendigen supersonischen Gasstrahls und Partikelaustrags erscheint aber dieses Verfahren sowohl im Hinblick auf den apparativen Aufwand als auch im Hinblick auf den Schmutzanfall als nicht optimal.

Schließlich ist auch noch ein Verfahren zum Trennen von keramischen Platten unter Anwendung eines Laserstrahls aus der EP-A-0 613 765 bekannt, bei welchem mittels eines Laserstrahls ein Anritzen an den gewünschten Bruchlinien erfolgt und danach ein mechanisches Brechen der Platten erfolgt. Damit bringt aber auch dieses bekannte Verfahren keine wesentlichen Vorteile über das herkömmliche Trennverfahren mit mechanischem Anritzen und anschließendem mechanischem Brechen.

Aufgabe der Erfindung ist es daher, ein zum laserthermischen Trennen von sprödem, insbesondere keramischen Plattenmaterial, insbesondere von Plattenmaterial aus Porzellankeramik und Hartkeramik, geeignetes Verfahren zu schaffen.

Diese Aufgabe wird gemäß der Erfindung durch das im Anspruch 1 angegebene Verfahren gelöst. Vorteilhafte Ausgestaltungen und Einzelheiten des Verfahrens nach der Erfindung sind Gegenstand der Unteransprüche.

Bei dem erfindungsgemäßen Verfahren erfolgt ein Brennen von Plattenmaterials nur durch mittels Wärmeeintrags erzeugten Wärmespannungen in einer Weise, dass ohne Abplatzungen saubere und exakte Bruchlinien entstehen und ein mechanisches Brechen nicht erforderlich ist.

Das erfindungsgemäße Verfahren schafft eine Möglichkeit, den notwendigen Wärmeeintrag für die Erzeugung der zum Bruch führenden Wärmespannungen mit einem für das Plattenmaterial verträglichen Gradienten, aber trotzdem so schnell einzubringen, dass die Druckspannung in der Trennlinie (relativ zur Zugspannung der kalten Umgebung im Material) den Bruch der Platte an der vorgegebenen Stelle auslöst, und zwar in einer solchen Weise, dass eine über die gesamte Trennlinie gleichmäßige Druckspannung im Volumen des Plattenmaterials erzeugt wird.

Dies wird dadurch bewerkstelligt, dass die vorgesehene Trennlinie mittels des Laserstrahls mehrfach überstrichen wird, wobei der Laserstrahl zweckmäßigerweise mittels eines Spiegels bewegt wird. Bei längeren Trennlinien überstreicht der Laserstrahl jeweils eine bestimmte, relativ lange Strecke entlang der Trennlinie (Scannlänge), die bei jedem Überstreichen (Scann) inkrementierend entlang der Trennlinie verschoben, also jeweils um einen kleinen Schritt entlang der Trennlinie vorbewegt wird. Durch das mehrfache Überstreichen wird also eine Heizlinie (entsprechend der Scannlänge) über die andere gelegt, und zwar jeweils unterbrochen nicht nur von der Zeit, die der Spiegel zum Rücksprung benötigt, sondern auch durch eine gewisse Wartezeit zur Temperaturweitergabe im Material. Die typische Zykluszeit beträgt dabei ca. 50 ms bis 200 ms. Dadurch erwärmt sich die Trennlinie im Material immer mehr, bis die Platte genau dort reißt.

Um den Prozeß sicher zu gestalten, wird der Wärmeeintrag der Materialverträglichkeit des jeweiligen Materials angepasst, was durch geeignete Auswahl der Wartezeit erfolgen kann. Zusätzlich kann der Wärmeeintrag durch Variieren der Intensität des Laserstrahls noch weiter angepasst werden, und zwar in der Weise, dass beim Vorwärmen der Trennlinie, also bei anfänglichem Überstreichen, langsamer erhitzt wird mit einer Steigerung bei den folgenden Überstreichungen bis zum Ende des Trennprozesses. Dies kann auch insbesondere durch zwei aufeinanderfolgende unterschiedliche Heizvorgänge bewerkstelligt werden, nämlich derart, dass ein erstes krementierendes Überstreichen der Klemmlinie mit niedrigerem Wärmeeintrag und danach ein zweites inkrementierendes Überstreichen der Trennlinie mit höherem Wärmeeintrag erfolgt.

Versuche haben die Vorteile des erfindungsgemäßen Verfahrens bestätigt, denn bereits die ersten Versuchsanordnungen lieferten begeisternde Resultate. Bei normalen Baufliesen sind Arbeitsgeschwindigkeiten von größer als 2 m/min erzielbar. Der Prozeß ist schmutzfrei, leise, und die Kantenqualität entspricht polierten Kanten bei einer Schnittgenauigkeit deutlich unter 0,5 mm. Da bei einer Änderung der Plattenformate, die zu schneiden sind, keine Umstellzeiten anfallen, wird eine kommissionsweise Fertigung von Fliesen auch bei relativ kleinen Produktionsmengen möglich.

Das erfindungsgemäße Verfahren wird nachstehend unter Bezugnahme auf die anliegende schematische Zeichnung in ihren Einzelheiten näher beschrieben.

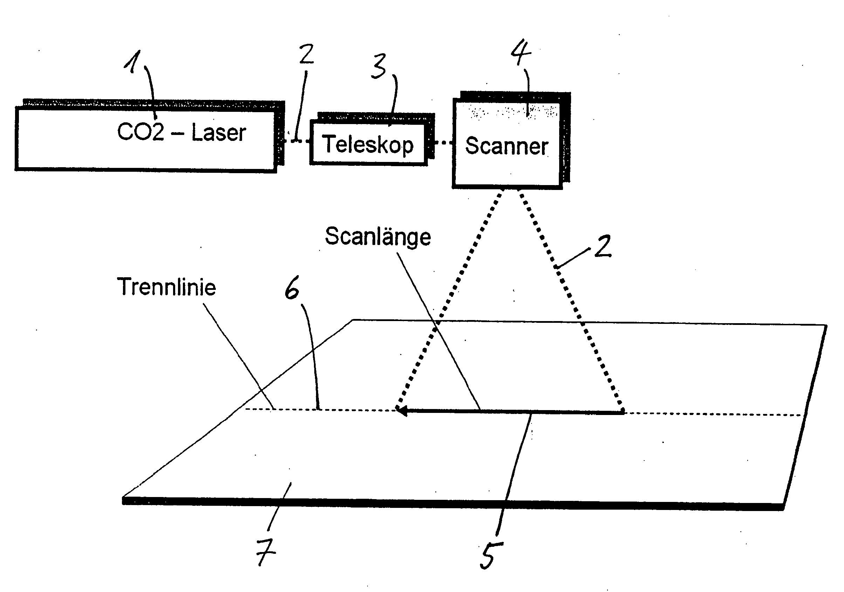

Die Zeichnung zeigt in schematischer Darstellung ähnlich einem Blockschaltbild die grundsätzliche Anordnung zur Ausführung des Verfahrens. Eine Laserquelle 1, beispielsweise ein CO₂-Laser, erzeugt einen Laserstrahl 2, der durch ein Teleskop 3 bzw. eine geeignete Optik zu einem Scanner 4 gelangt, der mit einem Spiegel arbeitet und eine entsprechende Winkelbewegung des Laserstrahls 2 erzeugt, so dass dieser jeweils über eine einer gegebenen Scanlänge entsprechende Strecke 5 entlang einer vorgesehenen Trennlinie 6 einer zu trennenden Platte 7 bewegt wird.

Es versteht sich, dass die Anordnung aus Laserquelle 1, Teleskop 3 und Scanner 4 zweckmäßigerweise stationär angeordnet wird und die Platte entlang der Trennlinie durch den Arbeitsraum gefördert wird, wenn die Trennlinie länger als die Scanlänge ist. Wird die Scannlänge gleich der Länge der Trennlinie gewählt, kann auch die Platte bei der Bearbeitung stehen bleiben und der Laserstrahl 1 heizt beim Überstreichen der Trennlinie vom einen bis zum anderen Ende der Platte diese auf einmal auf.

Der Scanner 4 hat tatsächlich zwei motorisch bewegbare Spiegel, über welcher der Laserstrahl an jeder Stelle der Arbeitsfläche unter der Laseranordnung in der X- oder/und der Y-Richtung gesteuert werden kann. Dabei kann der Strahl mit einer Geschwindigkeit bis zu 250 m/s seine Heizlinien auf das Material "schreiben".

Beim Überstreichen der Scanstrecke durch den Laserstrahl wäre ein schnelles Oszillieren des Laserstrahls und damit des jeweils auf die Platte auftreffenden Wärmepunkts hin und her zu ungleichen Erwärmungen im jeweiligen Umkehrpunkt und in der Streckenmitte führen, weshalb damit ein optimiertes Heizen über die Scanstrecke nicht möglich ist. Ebenso ist beim Scanen des Laserstrahls mit einem Spiegelpolygon nicht günstig, da dies nur hinsichtlich der Scangeschwindigkeit steuerbar ist, nicht jedoch hinsichtlich der Zykluszeit des Wärmeeintrags. Auch wäre damit die Einstellung der Länge der Scanstrecke nicht möglich.

Bei dem erfindungsgemäßen Verfahren ist es daher wesentlich, dass das Überstreichen der Scanstrecke auf der Trennlinie mit dem Laserstrahl stets in der gleichen Richtung erfolgt.

Das Rückspringen des Spiegels des Scanners 4 auf die Startposition des Laserstrahls für das nächste Überstreichen erfolgt daher bei ausgeschaltetem oder sonst unterbrochenem Laserstrahl. Durch Steuerung der Ausschaltzeit bzw. der Unterbrechungszeit des Laserstrahls 2 kann bei gleich bleibender Scangeschwindigkeit die Zykluszeit gesteuert werden.

Als Laserquelle 1 kann sowohl ein CO₂-Laser (ca. 10 µm Wellenlänge) wie auch ein YAG-Laser (ca. 1 µm Wellenlänge) verwendet werden. Bei mit dem erfindungsgemäßen Verfahren durchgeführten Versuchen wurde ein CO₂-Laser verwendet, wobei die Wärme von der Oberfläche der Platte her in das Volumen des Plattenmaterials eingebracht wurde. Dabei wurde ein relativ breiter (etwa 6 mm bis 10 mm) Laserfleck auf der Plattenoberfläche eingestellt, um bei möglichst hohem Wärmeeintrag eine möglichst geringe thermische Flächenbelastung zu erhalten und so den Wärmetransport in die Tiefe und nicht in die Breite zu optimieren.

Eine nachgeschaltete Kühleinrichtung; wie das zum Trennen von Glasplatten normaler Dicke mittels eines Laserstrahls nach dem Verfahren, wie es in der WO 2005/092 806 beschrieben ist, erforderlich ist, ist bei dem erfindungsgemäßen Verfahren nicht notwendig. Es kann aber zur Prozessoptimierung hilfreich sein, zu dem Zeitpunkt, wenn der Volumenriß kurz vor der Auslösung steht, mittels einer solchen Kühleinrichtung einen Initialriß einzubringen.

Die Steigerung des Wärmeeintrags in das Plattenmaterial während des mehrfachen Überstreichens mit dem Laserstrahl 2 kann derart erfolgen, dass, wenn bei jedem Überstreichvorgang die Trennlinie über ihre gesamte Länge überstrichen wird, die Intensität des Wärmeeintrags nach jedem einzelnen Überstreichen oder jeweils nach einer Anzahl von einzelnen Überstreichungen gesteigert wird. Wird bei längeren Trennlinien die Trennlinie inkremenentierend, d.h. mit sich überlappenden und jeweils um ein gewisses Inkrement entlang der Trennlinie weiter bewegten Scanstrecken bestrichen, wird das inkrimmentierende Überstreichen der gesamten Trennlinie 6 mindestens einmal oder mehrmals wiederholt und die Intensität des Wärmeeintrags bei der oder jeder Wiederholung gesteigert. Die Steigerung des Wärmeeintrags kann durch Steigerung der Intensität des Laserstrahls erfolgen.

## Patentansprüche

1. Verfahren zum laserthermischen Trennen von Platten aus keramischem oder anderem sprödem Material, wobei die Platte (7) entlang einer vorgesehenen Trennlinie (6) mit einem Laserstrahl (2) zum Zwecke des Wärmeeintrags in die Platte zum Induzieren von Wärmespannungen innerhalb des Materials überstrichen wird, die zum Bruch entlang der vorgesehenen Trennlinie führen, wobei ein mehrfaches Überstreichen der vorgesehenen Trennlinie (6) mit dem Laserstrahl (2) in stets gleicher Richtung erfolgt, **dadurch gekennzeichnet, dass** zwischen den einzelnen Überstreichungen jeweils eine Pause liegt, deren Dauer in Abhängigkeit von dem spezifischen zu trennenden Material wählbar und einstellbar ist.

2. Verfahren nach Anspruch 1, wobei das Überstreichen einer langen Trennlinie (6) durch den Laserstrahl (2) **dadurch** inkrementierend erfolgt, dass der Laserstrahl bei jedem einzelnen Überstreichen eine relativ lange Strecke entlang der Trennlinie überstreicht, die kürzer als die Trennlinie ist und bei jedem nächstfolgenden Überstreichvorgang um ein Inkrement entsprechend einem Bruchteil der Überstreichstreckenlänge relativ zur Trennlinie vorbewegt wird.

3. Verfahren nach Anspruch 1, wobei die Trennlinie (6) bei jedem einzelnen Überstreichen über ihre ganze Länge überstrichen wird, und wobei die Intensität des Wärmeeintrags nach jedem einzelnen Überstreichen oder nach jeweils mehreren einzelnen Überstreichungen gesteigert wird.

4. Verfahren nach Anspruch 2, wobei die das inkrementierende Überstreichen der gesamten Trennlinie (6) mindestens einmal wiederholt wird, wobei die Intensität des Wärmeeitnrags bei der oder jeder Wiederholung gesteigert wird.

5. Verfahren nach einem der Ansprüche 1 bis 4, wobei die Pausen zwischen den einzelnen Überstreichungen durch Abschalten oder Ausblenden des Laserstrahls (2) erzeugt werden.

6. Verfahren nach einem der Ansprüche 1 bis 5, wobei kurz vor dem erwarteten Bruch des Plattenmaterials mittels einer Kühldüse ein Kühlmedium auf einen Bereich der Trennlinie (6) aufgeblasen oder aufgespritzt wird, um die Auslösung eines Initialrisses zu begünstigen.

## Claims

1. A method for the laser-induced thermal separation of plates made of ceramic or other brittle material, wherein the plate (7) is scanned with a laser beam (2) along a provided separating line (6) for the purpose of introducing heat into the plate for inducing thermal stresses within the material, which stresses lead to a break along the provided separating line, wherein multiple scannings of the provided separating line (6) with the laser beam (2) are all effected in the same direction, **characterised in that** the individual scans are separated by a respective pause, the duration of which is selectable and adjustable as a function of the specific material to be separated.

2. The method according to claim 1, wherein the scanning of a long separating line (6) by the laser beam (2) is effected incrementally as a result of the fact that the laser beam scans during each individual scan a relatively long section along the separating line, which section is shorter than the separating line and is advanced during each subsequent scanning process by an increment corresponding to a fraction of the scanned section length relative to the separating line.

3. The method according to claim 1, wherein the separating line (6) is scanned over its entire length during each individual scan, and wherein the intensity of the introduced heat is increased after each individual scan or after in each case a plurality of individual scans.

4. The method according to claim 2, wherein the incremental scanning of the entire separating line (6) is repeated at least once, the intensity of the introduced heat being increased during the repetition or during each repetition, respectively.

5. The method according to any one of claims 1 to 4, wherein the pauses between the individual scans are generated by switching off or fading out the laser beam (2).

6. The method according to any one of claims 1 to 5, wherein shortly before the expected break of the plate material a cooling medium is blown or sprayed onto a region of the separating line (6) by means of a cooling nozzle, in order to promote the triggering of an initial crack.

## Revendications

1. Procédé destiné à la séparation thermique au laser de plaques constituées de céramique ou d'un autre matériau fragile, dans lequel la plaque (7) est balayée le long d'une ligne de coupe (6) prévue au moyen d'un rayon laser (2) aux fins de l'apport thermique dans la plaque afin d'induire des tensions thermiques au sein du matériau qui provoquent la rupture le long de la ligne de coupe prévue, dans lequel un balayage répété de la ligne de coupe (6) prévue au moyen du rayon laser (2) s'effectue toujours dans la même direction, **caractérisé en ce qu'**une pause, dont la durée peut être choisie et ajustée en fonction du matériau spécifique à séparer, a respectivement lieu entre chacun des balayages.

2. Procédé selon la revendication 1, dans lequel le balayage d'une longue ligne de coupe (6) par le rayon laser (2) est effectué de façon incrémentielle de manière à ce que lors de chacun des balayages individuels, le rayon laser balaye une course relativement longue le long de la ligne de coupe, qui est plus courte que la ligne de coupe et est avancée d'un incrément correspondant à une fraction de la longueur de course du balayage par rapport à la ligne de coupe lors de chaque processus de balayage successif.

3. Procédé selon la revendication 1, dans lequel lors de chacun des balayages individuels, la ligne de coupe (6) est balayée sur toute sa longueur et dans lequel l'intensité de l'apport thermique est augmentée après chacun des balayages ou après plusieurs balayages individuels respectifs.

4. Procédé selon la revendication 2, dans lequel le balayage incrémentiel de l'intégralité de la ligne de coupe (6) est réitéré au moins une fois, l'intensité de l'apport thermique étant augmentée lors de la réitération ou lors de chacune des réitérations.

5. Procédé selon l'une quelconque des revendications 1 à 4, dans lequel les pauses entre chacun des balayages sont générées par déconnexion ou atténuation du rayon laser (2).

6. Procédé selon l'une quelconque des revendications 1 à 5, dans lequel juste avant la rupture attendue du matériau de la plaque, un fluide réfrigérant est soufflé ou projeté au moyen d'une tuyère réfrigérante sur une région de la ligne de coupe (6) afin de favoriser le déclenchement d'une fissure initiale.
